# EUROPÄISCHE PATENTANMELDUNG

(11) **EP 0 544 982 A1**
(43) Veröffentlichungstag der Anmeldung: **09.06.1993**
(21) Anmeldenummer: 92110916.1
(22) Anmeldetag: 27.06.1992
(51) Int. Cl.: G01D 15/22

(54) **Schreibeinrichtung**

(30) Priorität: 06.12.1991 DE 4140298
(71) Anmelder: SENSYCON GESELLSCHAFT FÜR INDUSTRIELLE SENSORSYSTEME UND PROZESSLEITTECHNIK MBH, D-30179 Hannover (DE)
(72) Erfinder: Thönebe, Werner, W-3013 Barsinghausen 9 (DE); Riensche, Heinrich, W-3062 Bückeburg (DE)
(74) Vertreter: Meissner, Peter E., Dipl.-Ing.

(57) **Zusammenfassung**

© Die Erfindung bezieht sich auf eine Schreibeinrichtung zum Aufzeichnen von Meßwerten, insbesondere von alphanumerischen Daten auf einen Aufzeichnungsträger 31. Sie weist einen Schreibkopf 26 mit einem Schreibstift 27 auf, der mittels einer Halterung 15 beweglich auf einem quer zum Aufzeichnungsträger 31 bewegbaren Schlitten 1 angeordnet und mittels elektrischer Impulsen betätigbar ist. Dabei besteht die Halterung 15 aus zwei im wesentlichen parallel zueinander verlaufenden und an einem Ende miteiander verbundenen Schenkeln 17 und 18, ferromagnetischen Materials, von denen der eine am Schlitten 1 befestigt ist und der andere an seinem freien Ende 22 den Schreibkopf 26 trägt. Weiterhin ist die Halterung 15 mit einer mit den elektrischen Impulsen gespeisten Wicklung versehen. Im Bereich des Schreibkopfes 26 ist zwischen beiden Schenkeln 17 und 18 eine einen Luftspalt 24 bildende Verengung vorhanden. Die Schenkel 17 und 18 der Halterung 15 sind voneinander weg federnd vorgespannt. Die Wicklung ist eine Zylinderspule 21, die einen Spulenkern 23 umschließt sowie mit ihrer Windungsebene etwa parallel zu einem Schenkel 17, 18 der Halterung 15 auf der den zweiten Schenkel 17 zugewandten Fläche dieses ersten Schenkels 18 angeordnet ist.

## Beschreibung

Die Erfindung bezieht sich auf eine Schreibeinrichtung zum Aufzeichnen von Meßwerten, insbesondere von alphanumerischen Daten, auf einen Aufzeichnungsträger, mit einem einen Schreibstift aufweisenden Schreibkopf, der mittels einer Halterung beweglich auf einem quer zum Aufzeichnungsträger bewegbaren Schlitten angeordnet und mittels elektrischer Impulse betätigbar ist, wobei die Halterung aus zwei, im wesentlichen parallel zueinander verlaufenden und an einem Ende miteinander verbundenen Schenkeln ferromagnetischen Materials besteht, von denen der eine am Schlitten befestigt ist und der andere an seinem freien Ende den Schreibkopf trägt, wobei weiterhin die Halterung mit einer mit den elektrischen Impulsen gespeisten Wicklung versehen ist und wobei im Bereich des Schreibkopfes zwischen beiden Schenkeln eine einen Luftspalt bildende Verengung vorhanden ist, nach Patent Nr. (Anmeldung Nr. P 40 20 147.3).

Bei der Schreibeinrichtung nach dem Hauptpatent ist der eine Schenkel der Halterung von einer Wicklung umfaßt. Bei Beaufschlagung der Wicklung mit Steuerimpulsen wird in den beiden Schenkeln ein Magnetfluß erzeugt, der bestrebt ist den Luftspalt zwischen den beiden Schenkeln zu verringern und so den beweglichen Schenkel an den feststehenden Schenkel heranzuziehen und auf diese Weise den Schreibkopf mit dem Schreibstift auf den Aufzeichnungsträger zu drücken.

Die durch die Wicklung erzeugbare Magnetkraft ist in ihrer Größe beschränkt, so daß auch die den bewegbaren Schenkel von dem Aufzeichnungsträger abhebende Kraft nur begrenzt groß sein darf.

Dies führt dazu, daß sowohl die Ansprechzeit von dem Einschaltzeitpunkt bis zur effektiven Auflage des Schreibstifts auf dem Aufzeichnungsträger, als auch die Abhebzeit des Schreibstifts vom Aufzeichnungsträger relativ groß ist.

Aufgabe der Erfindung ist es daher eine Schreibeinrichtung der eingangs genannten Art zu schaffen, die bei einfachstem Aufbau und geringem Bauvolumen zu kurzen Reaktionszeiten der Schreibaktivierung und -deaktivierung und somit zu einer erhöhten Schreibgeschwindigkeit führt.

Diese Aufgabe wird erfindungsgemäß dadurch gelöst, daß die Schenkel der Halterung voneinander weg federnd vorgespannt sind und die Wicklung eine Ring- oder Zylinderspule ist, die einen Spulenkern umschließt sowie mit ihrer Windungsebene etwa parallel zu einem Schenkel der Halterung auf der dem zweiten Schenkel zugewandten Fläche dieses ersten Schenkels angeordnet ist. Durch die Ring- bzw. Zylinderspule können bei gleicher Strombeaufschlagung erheblich höhere Magnetkräfte erzeugt werden, die nicht nur ein schnelleres Bewegen des Schreibstifts auf den Aufzeichnungsträger bewirken, sondern auch eine erhebliche entgegengerichtet auf den beweglichen Schenkel einwirkende federnde Vorspannkraft zulassen, die zu einem schnellen Abheben des Schreibstifts vom Aufzeichnungsträger führt. Damit wird eine erhöhte Schreibgeschwindigkeit ermöglicht.

Zur einfachen Montage kann die Ring- oder Zylinderspule in eine topfförmige Aufnahme des Schlittens einsetzbar sein. Zur günstigen Beeinflussung des Magnetflusses kann der Spulenkern topfartig ausgebildet und mit seinem Boden an dem der Ring- oder Zylinderspule tragenden ersten Schenkel in Anlage sein, wobei die Topföffnung dem zweiten Schenkel zugewandt ist.

Besitzt der Spulenkern einen sich zum zweiten Schenkel hin etwa dachartig verjüngenden Querschnitt, so führt dies zu erhöhter Konzentration der Feldlinien in Querrichtung beim Eintauchen des Ankers in den Spulenkern und damit zur Linearisierung der Magnetkraft in Luftspalt zwischen Spulenkernboden und Ankerfläche. Durch diese Maßnahme wird erreicht, daß die Anpreßkraft des Schreibstiftes bei Höhetoleranzen konstant bleibt.

Dabei werden die Verluste gering gehalten, wenn der Anker einen zylindrischen Querschnitt mit einem gering kleineren Durchmesser als dem Durchmesser der Topföffnung des Spulenkerns aufweist.

Besteht die Halterung aus einer einteiligen, U-förmigen Blattfeder, deren Schenkel sich voneinander weg bewegend vorgespannt sind und an deren einander zugewandten Flächen die Ring- bzw. Zylinderspule mit dem Spulenkern bzw. der Anker angeordnet sind, so wird durch die Einteiligkeit eine unnötige Schwächung des Magnetflusses vermieden. Weiterhin erfüllt die Blattfeder nicht nur die Funktion der Halterung und der den Magnetfluß leitenden Bauteil, sondern auch die Funktion der Rückstellfeder. Es ist somit kein zusätzliches Federbauteil erforderlich. Die U-förmige Blattfeder vereinigt somit in einem einzigen einfachen Bauteil eine Vielzahl von Funktionen.

Um die den Luftspalt bildende Verengung zwischen den Schenkeln festzulegen kann der Bewegungsweg der Schenkel voneinander weg durch einen Anschlag begrenzt sein. Dazu ist der Anschlag vorzugsweise am Schlitten bzw. an dem am Schlitten befestigten Schenkel der Halterung angeordnet und umgreift den anderen Schenkel fesselnd.

Eine einfache Einjustierung des Luftspaltes ist dadurch möglich, daß der Anschlag den Abstand zwischen den Schenkeln verändernd verstellbar ist.

In besonders einfacher Ausgestaltung kann dazu der Anschlag eine Schraube sein, die mit dem freien Ende des Gewindeschafts in eine Gewindebohrung des Schlittens bzw. des schlittennahen Schenkels einschraubbar ist, während sie mit ihrem anderen Ende des Gewindeschafts eine Ausnehmung des dem schlittenferneren Schenkels durchragt und an diesem Ende einen Schraubenkopf größerer radialer Erstreckung als der Ausnehmung besitzt.

Besteht dabei die Schraube aus einem Kunststoff, so ist sie zum einen ohne zusätzliche Maßnahmen gegen selbsttätiges Verstellen gesichert. Zum anderen bildet sie gleichzeitig mit ihrem Schraubenkopf einen gedämpften Anschlag.

Ein Ausführungsbeispiel der Erfindung ist in der Zeichnung dargestellt und wird im folgenden näher beschrieben. Es zeigen
Fig. 1 eine Draufsicht auf eine Schreibeinrichtung
Fig. 2 eine Seitenansicht der Schreibeinrichtung nach Figur 1 entlang der Linie II-11
Fig. 3 einen Querschnitt des Spulenkerns der Schreibeinrichtung nach Figur 1
Fig. 4 eine Seitenansicht des Spulenkerns nach Figur 3
Fig. 5 eine Draufsicht des Spulenkerns nach Figur 3.

Die Schreibeinrichtung besteht aus einem Schlitten 1, der auf zwei Führungsstangen 2 und 3 gleitet, die an zwei Seitenteilen 4 und 5 eines Linienschreibers befestigt sind.

Die Führungsstange 2 durchsetzt zwei am Schlitten 1 angeordnete Lageraugen 6 und 7.

Die Drehsicherung des Schlittens erfolgt durch die Führungsstange 3 und Führungsnuten 8 am rückwertigen Schlittenteil.

Die Bewegung des Schlittens erfolgt mittels eines Seilantriebs, der aus einem Zugseil 9, das an der Unterseite des Schlittens mittels Schrauben befestigt ist und drei Seilrollen 11, 12 und 13 umschlingt. Die Seilrolle 13 wird von einem Schrittmotor 14 angetrieben, der den Schlitten 1 in seiner jeweiligen Position präzise verfährt. Auf dem Schlitten 1 sitzt die Halterung 15, die aus einer U-förmigen Blattfeder 16 besteht, welche zwei Schenkel 17 und 18 aufweist. Am Schenkel 18 sind zwei Befestigungsfahnen 19 und 20 angeformt, mittels derer und dazugehöriger Schrauben die Blattfeder 16 auf dem Schlitten befestigt ist.

Im Bereich des Schenkels 18 ist am Schlitten 1 eine topfförmige Aufnahme 10 ausgebildet in die eine Zylinderspule 21 eingesetzt ist, deren Windungsebene etwa parallel zu den Schenkeln 17 und 18 ausgerichtet ist. Von der Zylinderspule 21 ist ein Spulenkern 23 umschlossen, der topfartig ausgebildet ist und mit seiner Topföffnung 33 dem Schenkel 17 zugewandt ist. Mit seinem Boden 35 liegt der Spulenkern 23 auf dem Schenkel 18 auf.

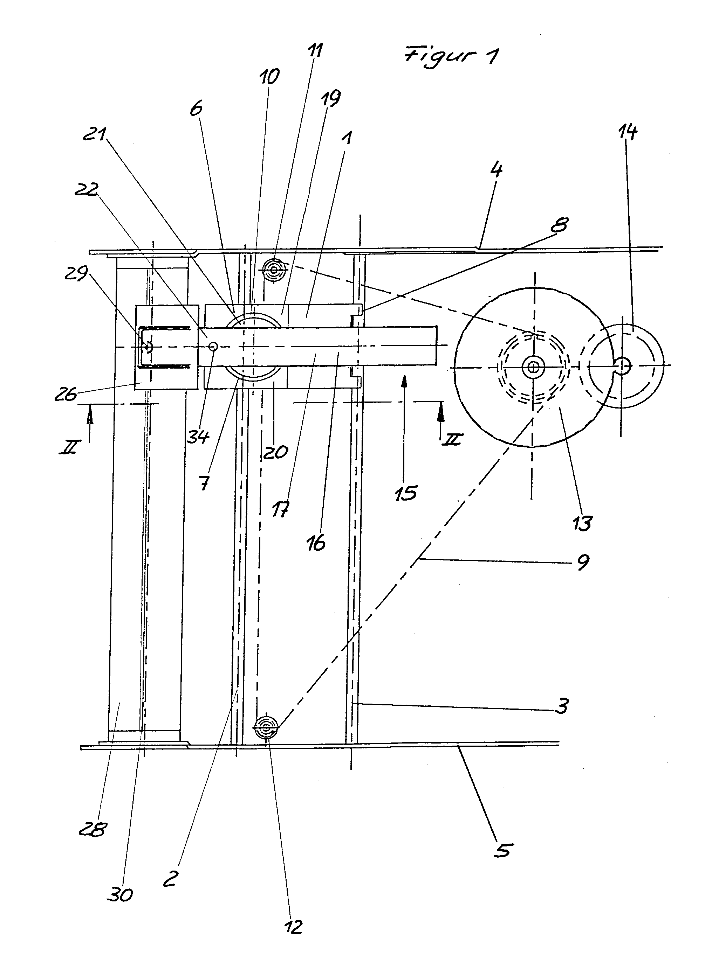

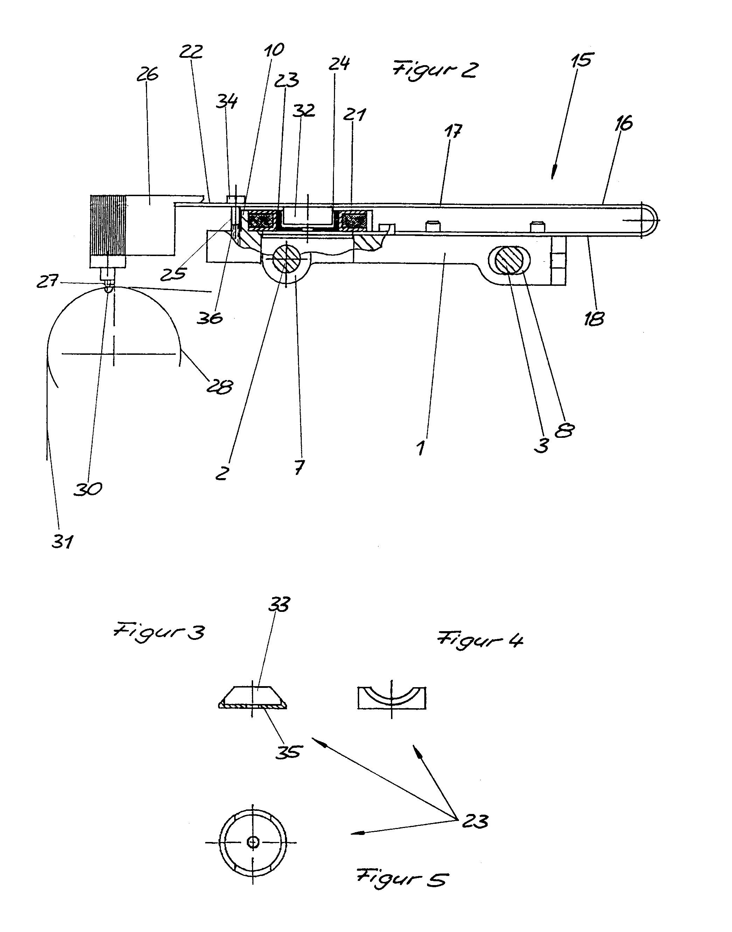

Wie insbesondere in den Figuren 3, 4 und 5 dargestellt ist, ist die Ringwand des topfförmigen Spulenkerns 23 an dem zur Topföffnung gerichteten Bereich symmetrisch schräg abgeschnitten, so daß der Spulenkern 23 einen dachartig sich verjüngenden Querschnitt besitzt.

Koaxial zur Zylinderspule 21 ist am Schenkel 17 ein Anker 32 mit zylindrischem Querschnitt befestigt, der in die Topföffnung 33 des Spulenkerns 23 hineinragt und einen gering kleineren Durchmesser als die Topföffnung 33 des Spulenkerns 23 besitzt. Dadurch ist zwischen Spulenkern 23 und Anker 32 ein Luftspalt 24 gebildet.

An dem dem Aufzeichnungsträger 21 zugewandten Ende ist der Schlitten 1 mit einer Gewindebohrung 36 versehen, in die eine Schraube 25 aus Kunststoff mit dem freien Ende ihres Gewindeschafts eingeschraubt ist. Die Schraube 25 ragt mit dem anderen Ende ihres Gewindeschafts durch eine quer durchgehende Ausnehmung des Schenkels 17 und besitz an diesem freien Ende einen Schraubenkopf 34 größerer radialer Erstreckung als sie die Ausnehmung im Schenkel 17 besitzt. Damit bildet der Schraubenkopf 34 einen den Abstand zwischen den Schenkeln 17 und 18 begrenzenden Anschlag. Die Blattfeder 16 ist derart durch den Schraubenkopf 34 gefesselt, daß der frei schwenkbare Schenkel 17 bei nicht bestromter Zylinderspule 21 mit Vorspannung am Schraubenkopf 34 anliegt.

Auf dem freien Ende 22 des Schenkels 17 sitzt der Schreibkopf 26, der in Form einer Tintenpatrone ausgebildet ist. Die Tintenpatrone trägt einen Schreibstift 27 der gegen eine walzenartige Schreibunterlage 28 gerichtet ist. Der Schreibkopf 26 ist mit Rastmitteln 29 auf dem freien Ende des Schenkels 17 gesichert.

In der walzenartigen Schreibunterlage 28, die parallel zu den Führungsstangen 2 und 3 der Schreibeinrichtung ausgerichtet ist, ist im Auftreffbereich des Schreibstifts 27 eine Nut 30 vorhanden, die ein Ausweichen des Aufzeichnungsträgers 31 während des Schreibvorgangs gestattet, wodurch eine statische Überbestimmung des Systems vermieden wird.

Bei Beaufschlagung der Zylinderspule 21 mit elektrischen Stromimpulsen wird in der aus ferromagnetischem Material bestehenden Blattfeder 16 ein Magnetfluß erzeugt, der die Schenkel 17 und 18, den Spulenkern 23, den Anker 32 und den Luftspalt 24 durchsetzt. Da dieser Kreis versucht seinen magnetischen Widerstand möglichst klein zu halten, wird der Schenkel 17 mit seinem Anker 32 so weit als möglich in die Topföffnung 33 des Spulenkerns 23 hineinbewegt und gleichzeitig der Schreibstift 27 an den Aufzeichungsträger 31 in Anlage gebracht. Hierdurch wird ein Punkt auf dem Aufzeichnungsträger 31 erzeugt. Nach dem Ende des Stromimpulses federt der Schenkel 17 in seine Ausgangslage zurück und kommt hierbei zur Anlage an den Schraubenkopf 34 der Schraube 25. Danach wird der Schlitten durch den Schrittmotor 14 in seine neue Position verfahren und erneut ein Stromimpuls auf die Wicklung 21 gegeben. Nachdem alle zur Erzeugung der alphanumerischen Daten erforderlichen Punkte in einer Linie quer zum Aufzeichnungsträger aufgezeichnet sind, wird der Aufzeichnungsträger quer zur Verschiebungsbewegung des Schlittens 1 vorwärts bewegt, so daß, wenn die neue Position des Aufzeichungsträgers erreicht worden ist, eine neuerliche Reihe von Punkten aufgezeichnet werden kann.

## Patentansprüche

1. Schreibeinrichtung zum Aufzeichnen von Meßwerten, insbesondere von alphanumerischen Daten, auf einen Aufzeichnungsträger mit einem einen Schreibstift aufweisenden Schreibkopf, der mittels einer Halterung beweglich auf einem quer zum Aufzeichnungsträger bewegbaren Schlitten angeordnet und mittels elektrischer Impulse betätigbar ist, wobei die Halterung aus zwei, im wesentlichen parallel zueinander verlaufenden und an einem Ende miteinander verbundenen Schenkeln ferromagnetischen Materials besteht, von denen der eine am Schlitten befestigt ist und der andere an seinem freien Ende den Schreibkopf trägt, wobei weiterhin die Halterung mit einer mit den elektrischen Impulsen gespeisten Wicklung versehen ist und wobei im Bereich des Schreibkopfes zwischen den beiden Schenkeln eine einen Luftspalt bildende Verengung vorhanden ist, nach Patent Nr. (Anmeldung Nr. P 40 20 174.3), dadurch gekennzeichnet, daß die Schenkel (17, 18) der Halterung (15) voneinander weg federnd vorgespannt sind und die Wicklung eine Ring- oder Zylinderspule (21) ist, die einen Spulenkern (23) umschließt sowie mit ihrer Windungsebene etwa parallel zu einem Schenkel (17, 18) der Halterung (15) auf der den zweiten Schenkel (17) zugewandten Fläche dieses ersten Schenkels (18) angeordnet ist.

2. Schreibeinrichtung nach Anspruch 1, dadurch gekennzeichnet, daß die Ring- oder Zylinderspule (21) in eine topfförmige Aufnahme (10) des Schlittens (1) einsetzbar ist.

3. Schreibeinrichtung nach einem der vorhergehenden Ansprücche, dadurch gekennzeichnet, daß der Spulenkern (23) topfartig ausgebildet und mit seinem Boden (35) an dem die Ring-oder Zylinderspule (21) tragenden ersten Schenkel (18) in Anlage ist, wobei die Topföffnung (33) dem zweiten Schenkel (17) zugewandt ist.

4. Schreibeinrichtung nach einem der vorhergehenden Ansprüche, dadurch gekennzeichnet, daß der Spulenkern (23) einen sich zum zweiten Schenkel (17) hin etwa dachartig verjüngenden Querschnitt besitzt.

5. Schreibeinrichtung nach einem der vorhergehenden Ansprüche, dadurch gekennzeichnet, daß an dem zweiten Schenkel (17) ein koaxial zur Ring- oder Zylinderspule (21) ragender Anker (32) angeordnet ist.

6. Schreibeinrichtung nach Anspruch 5, dadurch gekennzeichnet, daß der Anker (32) in die Topföffnung (33) des Spulenkerns (23) ragt.

7. Schreibeinrichtung nach Anspruch 6, dadurch gekennzeichnet, daß der Anker (32) einen zylindrischen Querschnitt mit einem gering kleineren Durchmesser als dem Durchmesser der Topföffnung (33) des Spulenkerns (23) aufweist.

8. Schreibeinrichtung nach einem der vorhergehenden Ansprüche, dadurch gekennzeichnet, daß die Halterung (15) aus einer einteiligen, U-förmigen Blattfeder (16) besteht, deren Schenkel (17, 18) sich voneinander weg bewegend vorgespannt sind und an deren einander zugewandten Flächen die Ring- bzw. Zylinderspule (21) mit dem Spulenkern (23) bzw. der Anker (32) angeordnet sind.

9. Schreibeinrichtung nach Anspruch 8, dadurch gekennzeichnet, daß der Bewegungsweg der Schenkel (17, 18) voneinander weg durch einen Anschlag begrenzt ist.

10. Schreibeinrichtung nach Anspruch 9, dadurch gekennzeichnet, daß der Anschlag am Schlitten (1) bzw. an dem am Schlitten (1) befestigten Schenkel (18) der Halterung (15) angeordnet ist und den anderen Schenkel (17) fesselnd umgreift.

11. Schreibeinrichtung nach Anspruch 9, dadurch gekennzeichnet, daß der Anschlag den Abstand zwischen den Schenkeln verändernd verstellbar ist.

12. Schreibeinrichtung nach Anspruch 9, dadurch gekennzeichnet, daß der Anschlag eine Schraube (25) ist, die mit dem freien Ende des Gewindeschafts in eine Gewindebohrung (36) des Schlittens (1) bzw. des schlittennahen Schenkels einschraubbar ist, während sie mit ihrem anderen Ende des Gewindeschafts eine Ausnehmung des dem Schlitten (1) ferneren Schenkels (17) durchragt und an diesem Ende einen Schraubenkopf (34) größerer radialer Erstreckung als der Ausnehmung besitzt.

13. Schreibeinrichtung nach Anspruch 12, dadurch gekennzeichnet, daß die Schraube (25) aus Kunststoff besteht.
